# EUROPÄISCHE PATENTSCHRIFT

(11) **EP 2 840 454 B1**
(45) Veröffentlichungstag und Bekanntmachung des Hinweises auf die Patenterteilung: **04.10.2017**
(21) Anmeldenummer: 14180590.3
(22) Anmeldetag: 11.08.2014
(51) Int. Cl.: G05B 19/042, G05B 23/02

(54) **Verfahren und Vorrichtung zum Betrieb einer Automationsanlage**
Method and device for operating an automation installation
Procédé et dispositif de fonctionnement d'un système d'automation

(30) Priorität: 09.08.2013 DE 102013013343
(43) Veröffentlichungstag der Anmeldung: 25.02.2015
(73) Patentinhaber: Avelon Cetex AG, 8048 Zürich (CH)
(72) Erfinder: Putz, Leo, 8910 Affoltern am Albis (CH)
(74) Vertreter: Reitstötter Kinzebach

(56) Entgegenhaltungen:
- EP-A2- 1 445 673
- EP-A2- 2 169 490
- US-B1- 7 925 611

## Beschreibung

Die Erfindung betrifft ein Verfahren und Vorrichtung zum Betrieb einer Automationsanlage.

### Stand der Technik

In der Anlagentechnik wird die Einordung von verschiedenen Techniken und Systemen zur Anlagenüberwachung und Anlagensteuerung häufig anhand einer Automatisierungspyramide dargestellt, die typischerweise zumindest drei Ebenen, nämlich eine Leit- bzw. Managementebene, eine Automationsebene und eine Feld- bzw. Feldbusebene umfasst. Jeder Ebene kommt dabei eine spezifische Aufgabe zu, wobei es je nach betrieblicher Situation fließende Grenzen zwischen den Ebenen geben kann. D1 = US 7925611 beschreibt ein Verfahren, wie Daten und Zeichenelemente eines industriellen Automatisierungssystems auf unterschiedlichen Endgeräten dargestellt werden können (z.B. Formatanpassungen). Für die Visualisierung und Bedienung von Automationsanlagen kommen Managementsysteme und Bedienpanels auf der Automationsebene im Sinne der DIN 276 zum Einsatz. Das Ziel ist auf der übergeordneten Ebene, sowie lokal die Zustände einer Anlage darzustellen und bei Bedarf, sowie auch in bei einem Notfall über die Ferne oder vor Ort eingreifen zu können.

Als Bedienpanels an den Schaltschränken kommen in der Regel Touchpanels zum Einsatz. Das Touchpanel kann auf einen, in einer speicherprogrammierbaren Steuerung (SPS) integrierten Webserver zugreifen, oder eine lokale Visualisierung enthalten. Auf diese Art und Weise können Anlagenzustände visualisiert und Notbedienungen während eines Ausfalls des überlagerten Managementsystems oder des, die Automationseinheit erschließenden Netzwerks sichergestellt werden.

Kommen ein Managementsystem und lokale Bedienpanels zum Einsatz, wird eine Visualisierung für die lokalen Bedienpanels und eine Visualisierung für das Gebäudemanagementsystem erstellt. Das notwendige doppelte Engineering ist auf die unterschiedliche Bildschirmauflösung, Bildschirmverhältnis, Bedienung und eingeschränkte Leistungsfähigkeit der Bedienpanels, in der Regel ein Embedded System, im Vergleich zum Managementsystem, das in der Regel auf einem leistungsfähigen Server implementiert ist, zurückzuführen.

### Technisches Problem

Der vorliegenden Erfindung liegt daher das technische Problem zugrunde, ein Verfahren und eine Vorrichtung zum Betrieb einer Automationsanlagen bereitzustellen, dieses doppelte Engineering vermeidet oder zumindest stark vereinfacht.

### Erfindung

Gelöst wir dieses technisches Problem durch das Verfahren des Anspruchs 1 und die Vorrichtung des Anspruchs 10. Vorteilhafte Weiterbildungen der Erfindung werden in den abhängigen Ansprüchen offenbart.

Der Erfindung liegt die Überlegung zugrunde, die Visualisierung auf der Automationsebene und/oder Feldebene mit der Visualisierung auf der Managementebene identisch auszubilden. Dazu wird vorgeschlagen, die Visualisierung auf der Automationsebene und/oder Feldebene durch einen Datenexport von der Managementebene zu verwirklichen.

Die Erfindung betrifft demnach ein Verfahren zum Betrieb einer Automationsanlage, bei dem man eine Visualisierung der Anlage auf einem Rechner auf einer Managementebene erstellt, wobei die Visualisierung dynamisch veränderbare Zeichenelemente und diesen Zeichenelementen zugeordnete Datenpunkte umfasst; die Zeichenelemente und die zugeordneten Datenpunkte zusammen mit den Datenpunkten zugeordneten Quellangaben auf wenigstens eine Anzeigeeinheit auf einer Automationsebene und/oder einer Feldebene exportiert; und die Anlage auf der wenigstens einen Anzeigeeinheit auf der Automationsebene und/oder der Feldebene visualisiert, wobei die Akquisition der Datenpunkte und deren Eigenschaften auf der Automationsebene und/oder der Feldebene erfolgt.

Die Erfindung ermöglicht es auf das doppelte Engineering der Visualisierung und Bedienung auf der Managementebene und der Automationsebene zu verzichten.

Ebenso ermöglicht die Erfindung die Visualisierung auf Managementebene und Automationsebene zu vereinheitlichen.

Im ersten Schritt wird die Anlagenvisualisierung auf der Managementebene, die auf einem Rechner oder Server lokalisiert ist, erstellt. Das kann unter Verwendung eines Notebooks im internen Netzwerk oder über Fernzugriff und durch Nutzung des Standard-Browsers erfolgen. In Bezug auf die Visualisierung auf dem Managementsystem wünscht sich der Anlagenbetreiber üblicherweise eine kundenspezifische Darstellung der Anlagenkomponenten durch eigens gezeichnete Zeichenelemente.

Vorzugsweise werden zur Darstellung der Anlagenzustände die Zeichenelemente kunden- und anlagenspezifisch dynamisiert. Beispielsweise kennzeichnen Animationen und Einfärbungen die jeweiligen Anlagen- und Komponentenzustände.

Die frei definierbaren Zeichenelemente sind in vorzugsweise Bibliotheken organsiert. Die Zeichenelemente werden vorzugsweise im SVG-Format definiert. Grafische Elemente werden in Gruppen zusammenfasst und Änderungen an ihrer Darstellung bestimmten Zustände von Datenpunkten zugewiesen, was eine Dynamisierung die Darstellung ermöglicht. Die Bibliotheken mit den frei definierbaren Zeichenelementen werden vorzugsweise von der Managementebene exportiert und auf Automationsebene und/oder Feldebene importiert.

Die Datenpunkte können manuell, oder durch eine Datenverbindung aus den SPSen auf der Managementebene, die auf einem Server implementiert sein kann, hinterlegt werden. Vorzugsweise kommen hierfür der Import von Datentabellen, bspw. bei Modbus, oder die automatische Erkennung von Datenpunkten, bspw. bei BACnet, M-Bus, OPC zum Einsatz.

Vorzugsweise werden aus den Zeichenelementen und Datenpunkten die Anlagenbilder zusammengestellt. Dynamische Verbindungen zwischen Zeichenelementen dokumentieren die Prozess- und Anlagenzusammenhänge. Durch die Verbindung von Datenpunkten mit Zeichenelementen entsteht ein Anlagenbild, das alle Zustände grafisch visualisiert.

Im nächsten Schritt werden die Bibliotheken, Anlagenbilder und Datenpunkte exportiert und auf Automationsebene und/oder Feldebene importiert.

Vorzugsweise exportiert die Managementebene die Daten in Form einer XML-Datei. Der Export enthält die erstellen Zeichenobjekte, vorzugsweise im SVG-Format, die Dynamisierungen und Verbindungen. Die Datenpunkte und deren Eigenschaften werden mit Quellangaben exportiert, sodass die Akquisition der Datenpunkte direkt auf der Automationsebene bzw. Feldebene passieren kann. Je nach Kommunikationsprotokoll kann es sich bei den Datenpunkten und deren Eigenschaften um Datenadressen und den Datenadresse zugeordneten Werten handeln, die bei der Implementierung des erfindungsgemäßen Verfahrens vom Programmierer interpretiert werden müssen. In komplexeren Protokollen handelt es sich um Objekte, die Eigenschaften (Properties) wie Live-Wert, Beschreibung, Maximalwert, Minimalwert, usw. umfassen können.

Erfindungsgemäß kann der Export die ganze Visualisierung der Managementebene oder nur Teile davon umfassen.

Das Export-File wird vom Managementsystem auf eine Anzeigeeinheit, die mobil oder fest montiert sein kann, geladen. Alternativ kann die Anzeigeeinheit den Export von der Managementebene, die auf dem Server gehostet ist, beziehen. Die Anzeigeeinheit kann ein mobiles Tablet sein. Die Anzeigeeinheit verfügt über die gleichen Daten für die Darstellung einer Visualisierung, wie die die Managementebene auf dem Server. Die Anzeigeeinheit basiert üblicherweise auf einem anderen Betriebssystem als die Managementebene basiert, beispielsweise auf dem iOS-Betriebssystem von Apple oder dem Android-Betriebssystem von Google. Die Anzeigeeinheit analysiert den Daten-Export aus der Managementebene und stellt die Anlagenvisualisierung möglichst exakt so wie auf der Managementebene dar. Die möglicherweise unterschiedlichen Auflösungen können durch einen Skalierungsfaktor ausgeglichen werden.

Aus dem Daten-Export erkennt die Anzeigeeinheit die Datenpunkte, sowie deren Quellen und Kommunikationsprotokoll.

Die Anzeigeeinheit kann vorzugsweise mit Bauelementen der Automationsebene und/oder Feldebene kommunizieren, vorzugsweise über UDP- und IP-Verbindungen. Vorteilhaft kann die Anzeigeeinheit über Kommunikationsprotokolle auch Schreibbefehle auf die Automationsebene und/oder Feldebene absetzen. Beispielsweise kann die Anzeigeeinheit auf der Automations- oder der Feldebene direkt mit den SPSen kommunizieren, etwa um aktuelle Werte zu holen und/oder neue Werte auf die SPSen, bzw. unterlagerte Feldgeräte zu schreiben. Die Anzeigeeinheit steht dabei vorzugsweise im bidirektionalen Datenaustausch mit der Automationsebene, beispielsweise für die Alarmbearbeitung. Die Anzeigeeinheit kann beispielsweise auch mit der Managementebene auf dem Server Daten austauschen, beispielsweise für die Abarbeitung von Alarmen, die eine SPS direkt an die Managementebene sendet.

Vorzugsweise kann die Anzeigeeinheit bei Zusammenbruch des die Automationsanlage erschließenden Netzwerks, die lokale Automationsebene und/oder Feldebene visualisieren sowie Schreibbefehle absetzen. Somit ist die Visualisierung und Bedienung der Anlage auch bei einem bei Ausfall des übergeordneten Managementsystems und des, die Automationsanlage erschließenden Netzwerks gewährleistet.

Die vorliegende Erfindung betrifft auch eine Vorrichtung zum Betrieb einer Automationsanlage mit einem Rechner auf dem eine Managementebene mit einer Visualisierung der Anlage implementiert ist und der mit Bauelementen einer Automationsebene und/oder einer Feldebene in Datenverbindung steht und wenigstens einer Anzeigeeinheit die der Automationsebene und/oder der Feldebene zugeordnet ist und mit dem Rechner und den Bauelementen der Automationsebene und/oder der Feldebene in Datenverbindung steht, wobei die Vorrichtung zur Durchführung des erfindungsgemäßen Verfahrens ausgelegt ist.

Die Erfindung wird im Folgenden anhand eines in der beigefügten Zeichnung dargestellten bevorzugten Ausführungsbeispiels näher erläutert.

In der Zeichnung zeigt:

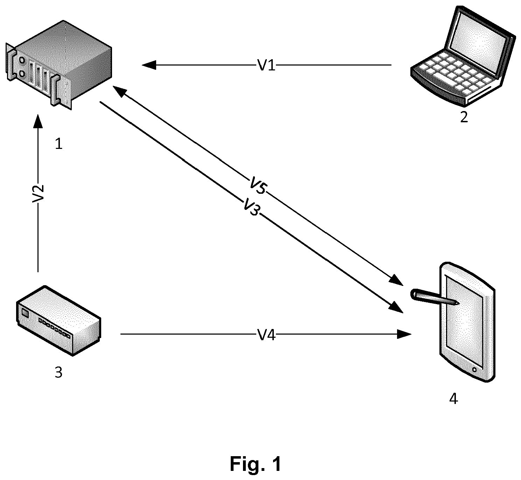

- Fig. 1: eine schematische Darstellung einer erfindungsgemäßen Vorrichtung zur Durchführung des erfindungsgemäßen Verfahrens.

In der Zeichnung erkennt man einen Rechner 1 auf dem die Anlagenvisualisierung auf der Managementebene lokalisiert ist. Dies kann unter Verwendung eines Notebooks 2 im internen Netzwerk oder über Fernzugriff und durch Nutzung des Standard-Browsers erfolgen (Symbolisiert durch den Pfeil V1). Zur Darstellung der Anlagenzustände werden die Zeichenelemente kunden- und anlagenspezifisch dynamisiert. Die frei definierbaren Zeichenelemente sind in Bibliotheken organsiert. Grafische Elemente werden in Gruppen zusammenfasst und Änderungen an ihrer Darstellung bestimmten Zustände von Datenpunkten zugewiesen (Dynamisierung). Die Datenpunkte können manuell, oder durch eine Datenverbindung V2 aus speicherprogrammierbaren Steuerungen 3 (SPSen) auf der Managementebene hinterlegt werden. Vorzugsweise kommen hierfür der Import von Datentabellen, bspw. bei Modbus, oder die automatische Erkennung von Datenpunkten, bspw. bei BACnet, M-Bus, OPC zum Einsatz. Aus den Zeichenelementen und Datenpunkten werden die Anlagenbilder zusammengestellt. Dynamische Verbindungen zwischen Zeichenelementen dokumentieren die Prozess- und Anlagenzusammenhänge. Durch die Verbindung von Datenpunkten mit Zeichenelementen entsteht ein Anlagenbild, das alle Zustände grafisch visualisiert. Die Bibliotheken, Anlagenbilder und Datenpunkte werden über eine Datenverbindung V3 auf eine mobile oder feste Anzeigeeinheit 4 exportiert, beispielsweise in Form einer XML-Datei. Der Export enthält die erstellen Zeichenobjekte, vorzugsweise im SVG-Format, die Dynamisierungen und Verbindungen. Die Datenpunkte werden mit Quellangaben exportiert, sodass die Akquisition der Datenpunkte über die Datenverbindung V4 direkt auf der Automationsebene bzw. Feldebene passieren kann. Die Anzeigeeinheit kann den Export von der Managementebene, die auf dem Rechner/Server 1 gehostet ist, auch aktiv über eine bidirektionale Leitung V5 beziehen. Aus dem Daten-Export erkennt die Anzeigeeinheit 4 die Datenpunkte, sowie deren Quellen und Kommunikationsprotokoll. Die Anzeigeeinheit 4 kommuniziert direkt über die Datenverbindung V4 mit den SPSen 3, beispielsweise, um aktuelle Werte zu holen und neue Werte auf die SPSen bzw. unterlagerte Feldgeräte zu schreiben, und ist daher für die Funktionsfähigkeit der Darstellung oder Steuerung der Anlage weder auf den Rechner/Server 1 noch auf die Datenverbindungen V3 oder V5 angewiesen.

## Patentansprüche

1. Verfahren zum Betrieb einer Automationsanlage, bei dem man
eine Visualisierung der Anlage auf einem Rechner (1, 2) auf einer Managementebene erstellt, wobei die Visualisierung dynamisch veränderbare Zeichenelemente und diesen Zeichenelementen zugeordnete Datenpunkte umfasst;
die Zeichenelemente und die zugeordneten Datenpunkte zusammen mit den Datenpunkten zugeordneten Quellangaben auf wenigstens eine Anzeigeeinheit (4) auf einer Automationsebene und/oder einer Feldebene exportiert; und
die Anlage auf der wenigstens einen Anzeigeeinheit (4) auf der Automationsebene und/oder der Feldebene visualisiert, wobei die Datenpunkte und ihre Eigenschaften durch die wenigstens eine Anzeigeeinheit (4) auf der Automationsebene und/oder der Feldebene akquiriert werden.

2. Verfahren gemäß Anspruch 1, wobei man zur Darstellung der Anlagenzustände die Zeichenelemente kunden- und anlagenspezifisch dynamisiert

3. Verfahren gemäß Anspruch 2, wobei Bibliotheken mit frei definierbaren Zeichenelementen von der Managementebene exportiert und auf Automationsebene und/oder Feldebene importiert werden.

4. Verfahren gemäß Anspruch 3, wobei aus den Zeichenelementen und Datenpunkten Anlagenbilder erstellt und die Anlagebilder von der Managementebene exportiert und auf Automationsebene und/oder Feldebene importiert werden.

5. Verfahren gemäß einem der vorhergehenden Ansprüche, wobei der Export die ganze Visualisierung der Managementebene oder nur Teile davon umfasst.

6. Verfahren gemäß einem der vorhergehenden Ansprüche, wobei die Anzeigeeinheit mit Bauelementen der Automationsebene und/oder Feldebene kommunizieren kann, vorzugsweise über UDP- und IP-Verbindungen.

7. Verfahren gemäß einem der vorhergehenden Ansprüche, wobei die Anzeigeeinheit über Kommunikationsprotokolle Schreibbefehle auf die Automationsebene und/oder Feldebene absetzen kann.

8. Verfahren gemäß einem der vorhergehenden Ansprüche, wobei die Anzeigeeinheit im bidirektionalen Datenaustausch mit der Automationsebene, steht.

9. Verfahren gemäß einem der vorhergehenden Ansprüche, wobei die Anzeigeeinheit bei Zusammenbruch des die Automationsanlage erschließenden Netzwerks, die lokale Automationsebene und/oder Feldebene visualisieren sowie Schreibbefehle absetzen kann.

10. Vorrichtung zum Betrieb einer Automationsanlage mit einem Rechner (1) auf dem eine Managementebene mit einer Visualisierung der Anlage implementiert ist und der mit Bauelementen (3) einer Automationsebene und/oder einer Feldebene in Datenverbindung steht und wenigstens einer Anzeigeeinheit (4) die der Automationsebene und/oder der Feldebene zugeordnet ist und mit dem Rechner (1) und den Bauelementen (3) einer Automationsebene und/oder einer Feldebene in Datenverbindung steht, wobei die Vorrichtung zur Durchführung des Verfahrens nach einem der Ansprüche 1 - 9 ausgelegt ist.

## Claims

1. Method for operating an automation installation, in which
a visualization of the installation is created on a computer (1, 2) on a management level, wherein the visualisation comprises dynamically variable graphic elements and data points assigned to said graphic elements;
the graphic elements and the assigned data points are exported together with source information assigned to the data points to at least one display unit (4) on an automation level and/or a field level; and
the installation is visualised on the at least one display unit (4) on the automation level and/or the field level, wherein the data points and their properties are acquired by the at least one display unit (4) on the automation level and/or the field level.

2. Method according to claim 1, wherein to display the installation states the graphic elements are dynamised specifically according to the customer and installation

3. Method according to claim 2, wherein libraries with freely definable graphic elements are exported from the management level and imported to the automation level and/or field level.

4. Method according to claim 3, wherein images of the installation are created from the graphic elements and data points and the installation images are exported from the management level and imported to the automation level and/or field level.

5. Method according to any of the preceding claims, wherein the export comprises the whole visualisation of the management level or only parts of the latter.

6. Method according to any of the preceding claims, wherein the display unit can communicate with components of the automation level and/or field level, preferably by UDP and IP connections.

7. Method according to any of the preceding claims, wherein by means of communication protocols the display unit can submit write commands to the automation level and/or field level.

8. Method according to any of the preceding claims, wherein the display unit is in bidirectional data exchange with the automation level.

9. Method according to any of the preceding claims, wherein the display unit on the breakdown of the network opening the automation installation can visualise the local automation level and/or field level and can submit write errors.

10. Device for operating an automation installation with a computer (1) on which a management level is implemented by a visualisation of the installation and which is in data connection with components (3) of an automation level and/or a field level and at least one display unit (4) which is assigned to the automation level and/or field level and which is in data connection with the computer (1) and the components (3) of an automation level and/or a field level, wherein the device is designed for performing the method according to any of claims 1 - 9.

## Revendications

1. Procédé d'exploitation d'une installation d'automatisation, dans lequel on
crée une visualisation de l'installation sur un ordinateur (1, 2) sur un niveau de gestion, la visualisation comprenant des éléments symboliques variables dynamiquement et des éléments symboliques comprenant des points de données correspondants ;
exporte les éléments symboliques et les points de données correspondants ensemble avec les informations sources correspondant aux points de données vers au moins une unité d'affichage (4) sur un niveau d'automatisation et/ou au niveau du terrain ; et
visualise l'installation sur l'au moins une unité d'affichage (4) sur le niveau d'automatisation et/ou le niveau du terrain, les points de données et leurs propriétés étant acquis par l'au moins une unité d'affichage (4) sur le niveau d'automatisation et/ou le niveau du terrain.

2. Procédé selon la revendication 1, moyennant quoi on dynamise les éléments symboliques pour la représentation des états de l'installation d'une manière spécifique au client et à l'installation.

3. Procédé selon la revendication 2, des bibliothèques avec des éléments symboliques pouvant être définis librement étant exportés à partir du niveau de gestion et importées vers le niveau d'automatisation et/ou le niveau du terrain.

4. Procédé selon la revendication 3, des images de l'installation étant créés à partir des éléments symboliques et des points de données et les images de l'installation étant exportées à partir du niveau de gestion et importées vers le niveau d'automatisation et/ou le niveau du terrain.

5. Procédé selon l'une des revendications précédentes, l'exportation comprenant la visualisation complète du niveau de gestion ou uniquement des parties de celle-ci.

6. Procédé selon l'une des revendications précédentes, l'unité d'affichage pouvant communiquer avec des composants du niveau d'automatisation et/ou du niveau du terrain, de préférence par l'intermédiaire de liaisons UDP et IP.

7. Procédé selon l'une des revendications précédentes, l'unité d'affichage pouvant envoyer par l'intermédiaire de protocoles de communication des instructions d'écriture au niveau d'automatisation et/ou au niveau du terrain.

8. Procédé selon l'une des revendications précédentes, l'unité d'affichage effectuant un échange de données bidirectionnel avec le niveau d'automatisation.

9. Procédé selon l'une des revendications précédentes, l'unité d'affichage pouvant visualiser le niveau d'automatisation et/ou le niveau de terrain local et envoyer des instructions d'écriture lors d'une interruption du réseau desservant l'installation d'automatisation.

10. Dispositif d'exploitation d'une installation d'automatisation avec un ordinateur (1) sur lequel est implémenté un niveau de gestion avec une visualisation de l'installation et qui est en liaison de données avec des composants (3) d'un niveau d'automatisation et/ou d'un niveau de terrain et au moins une unité d'affichage (4) qui correspond au niveau d'automatisation et/ou au niveau de terrain et est en liaison de données avec l'ordinateur (1) et les composants (3) d'un niveau d'automatisation et/ou d'un niveau de terrain, le dispositif étant conçu pour exécuter le procédé selon l'une des revendications 1 à 9.
